# EUROPÄISCHE PATENTSCHRIFT

(11) **EP 1 558 437 B1**
(45) Veröffentlichungstag und Bekanntmachung des Hinweises auf die Patenterteilung: **08.07.2015**
(21) Anmeldenummer: 03769363.7
(22) Anmeldetag: 09.10.2003
(51) Int. Cl.: B29C 47/00, B29C 47/38, B29C 47/60, B29C 47/82, B29C 47/84, B29C 47/86, B29C 47/92, B29K 301/10, B29L 23/00

(54) **EXTRUDIEREN VON PEROXIDISCHEN VERNETZBAREN FORMTEILEN AUS KUNSTSTOFF**
EXTRUSION OF PEROXIDIC CROSS-LINKABLE MOLDED PLASTIC PARTS
PRODUCTION PAR EXTRUSION DE PIECES MOULEES EN MATIERE PLASTIQUE RETICULABLE AU MOYEN DE PEROXYDES

(30) Priorität: 31.10.2002 DE 10251152
(43) Veröffentlichungstag der Anmeldung: 03.08.2005
(73) Patentinhaber: REHAU AG + Co, 95111 Rehau (DE)
(72) Erfinder: WINTER, Karlheinz, 95111 Rehau (DE); DUNKEL, Gerhard, 95111 Rehau (DE); SEEWALD, Günther, 95182 Döhlau (DE); ZWILLING, Herrmann, 95111 Rehau (DE)
(86) Internationale Anmeldenummer: PCT/EP2003/011152
(87) Internationale Veröffentlichungsnummer: WO 2004/039558

(56) Entgegenhaltungen:
- EP-A- 0 999 030
- DE-A- 2 146 024
- DE-A- 2 442 230
- DE-B- 2 754 877
- US-A- 4 243 773
- JAECKER M: "DAS KONISCHE KONZEPT DER ZUKUNFT VORTEILE DER NEGATIV-KONISCHEN GANGTIEFE BEI DOPPELSCHNECKENEXTRUDERN" KUNSTSTOFFE, CARL HANSER VERLAG. MUNCHEN, DE, Bd. 90, Nr. 12, Dezember 2000 (2000-12), Seite 64,66 XP000976101 ISSN: 0023-5563
- S. M Tamboli ET AL: "Properties of high-density polyethylene filled with waste crosslinked foam", Journal of Applied Polymer Science, 5 January 2004 (2004-01-05), pages 110-114, XP055113014, Hoboken DOI: 10.1002/app.13178 Retrieved from the Internet: URL:http://onlinelibrary.wiley.com/doi/10. 1002/app.13178/abstract
- "4Thermal Properties 4 1 Transition Point 411 Glass Transition Point (Secondary Transition Point)", , 26 November 2010 (2010-11-26), XP055113064, Retrieved from the Internet: URL:http://www.m-ep.co.jp/en/pdf/product/i upi_nova/physicality_04.pdf [retrieved on 2014-04-09]

## Beschreibung

Die vorliegende Erfindung bezieht sich auf ein Verfahren zum Extrudieren von peroxidisch vernetzten Rohren aus Kunststoff, bei denen der vernetzbare Kunststoff in einem Extruder erwärmt und kontinuierlich einem Extrusionswerkzeug zum Erzeugen des Rohres zugeführt wird und eine zumindest teilweise Vernetzung des Kunststoffs im Extrusionswerkzeug durch Erwärmen des Kunststoffs über eine Vernetzungstemperatur hinaus erfolgt, gemäß Anspruch 1.

Ein derartiges Verfahren ist z. B. aus der EP 0 999 030 A1 bekannt. Durch dieses Verfahren werden Rohre aus peroxidisch vernetzbarem Kunststoff hergestellt. Die Rohre bestehen dabei aus einem Polyethylen, dem ein organisches Peroxyd als Vernetzungsmittel und ein Antioxidationsmittel beigefügt ist. Anstelle von Polyethylen kann auch ein anderes Polyolefin zum Einsatz kommen. Bei dem in der EP 0 999 030 beschriebenen Verfahren wird die nicht geschmolzene Mischung aus dem Kunststoff und dem Peroxyd über einen bekannten Fülltrichter einem Extruder zugeführt. Der Extruder fördert den Kunststoff in das Extrusionswerkzeug, in dem letztendlich die Rohre erzeugt und die Vernetzung des Kunststoffs durchgeführt wird. Hierzu wird im Bereich des Extrusionswerkzeuges Wärme zugeführt, die das Vernetzen des Kunststoffs in Gang setzt. Der Kunststoff wird mit dem Vernetzungsmittel im Extrusionswerkzeug zunächst aufgeschmolzen und über die Vernetzungstemperatur erwärmt. Das sich im Extrusionswerkzeug vernetzende Material tritt dann aus dem Extrusionswerkzeug als extrudiertes Rohr aus. Um ein vorzeitiges Aufschmelzen und Vernetzen des Kunststoffs zu vermeiden, wurde der Extruder besonders kurz gestaltet und zudem an seinem Außenumfang mit einer Kühleinrichtung versehen. Die fertiggestellten Rohre eignen sich besonders als Wasserleitungen. Als problematisch bei der Herstellung solcher Rohre erweist sich das Einhalten prozesstechnischer Parameter. Das Nichteinhalten kann zu starken Qualitätsschwankungen bei der Herstellung der Rohre führen.

Zudem kann ein ungewolltes Vernetzen zu unerwünschten Spannungen und Belastungen im Extruder oder dem Extrusionswerkzeug führen. Beschädigungen am Extrusionswerkzeug oder dem Extruder können neben unzureichenden Eigenschaften des fertiggestellten Rohres die Folge sein.

Aufgabe ist es daher, ein Verfahren der eingangs genannten Art derart zu verbessern, dass bei möglichst gleichmäßiger und hoher Qualität der fertiggestellten Rohre das Verfahren besser beherrschbar ist.

Die Aufgabe wird erfindungsgemäß gelöst durch ein Verfahren der eingangs genannten Art, bei dem durch eine Temperiereinrichtung die Temperatur des ungeschmolzenen Kunststoffs im Extruder geführt bis auf einen Wert oberhalb dem Kristallitschmelzbereich des Kunststoffs, jedoch unterhalb der Vernetzungstemperatur erwärmt und erst nach Eintritt in das Extrusionswerkzeug die Temperatur über die Vernetzungstemperatur angehoben wird.

Durch diese Lösung lässt sich das Verfahren zum Herstellen von Rohren aus vernetzten Kunststoffen besser beherrschen. Durch das gezielte Erwärmen des Kunststoffs auf einen Wert oberhalb dem Kristallitschmelzbereich bereits im Extruder lässt sich schon vor dem eigentlichen Extrusionswerkzeug eine Homogenisierung des Kunststoffs erzielen, wodurch sich eine verbesserte Qualität des fertiggestellten Rohres erreichen lässt. Auch lässt sich durch ein gesteuertes Führen des Anstiegs der Temperatur des Kunststoffs die Qualität des fertiggestellten Rohres verbessern. Ein Vernetzen erfolgt erst gezielt im Extrusionswerkzeug. Da der Temperaturunterschied zwischen Schmelztemperatur und Vernetzungstemperatur jedoch vergleichsweise gering ist, lässt sich auch hier das Vernetzen besser steuern und der Vernetzungsgrad erhöhen.

Es ist Teil der Erfindung, wenn durch die Temperiereinrichtung dem Extruder Wärme von außen zugeführt wird. Es hat sich gezeigt, dass durch diese Anordnung der Temperaturverlauf im Extruder leichter beherrschbar und überwachbar ist.

Zudem kann es sich als günstig erweisen, wenn durch die Temperiereinrichtung im Extruder Wärme von innen abgeführt wird. Dies kann z. B. durch ein Kühlmittel in einer hohlgebohrten Schnecke des Extruders erfolgen. Durch ein Zuführen der Wärme von außen oder ein Abführen von innen, kann die Temperatur des Kunststoff im Extruder sehr genau bestimmt und eingehalten werden. Auf diese Weise kann sich die Qualität der fertiggestellten Rohre ebenfalls verbessern.

Weiterhin kann es sich als günstig erweisen, wenn ein Doppelschneckenextruder verwendet wird. Mit einem solchen Doppelschneckenextruder lässt sich der Ausstoß von fertiggestellten Formstücken erhöhen. Es hat sich zudem gezeigt, dass das Temperaturverhalten des Kunststoff im Doppelschneckenextruder genauer gesteuert werden kann.

Gemäß der Erfindung ist die Temperatur des Kunststoffs im Extrusionswerkzeug durch Wärmezufuhr von außen zum Extrusionswerkzeug erreicht werden. Durch eine Wärmezufuhr von außen kann die Temperatur besser überwacht werden. Zudem wird der Aufbau der Anlage vereinfacht.

Um einen schnelleren Anstieg der Temperatur zu ermöglichen, kann zudem auch die Temperatur des Kunststoffs im Extrusionswerkzeug durch Wärmezufuhr von innen verbessert werden.

Zur Durchführung des Verfahrens ist es sich als günstig erweisen, wenn die Temperatur des Kunststoffs im Extrusionswerkzeug zumindest 15% über der Vernetzungstemperatur liegt. Unter Vernetzungstemperatur soll die Temperatur verstanden werden, bei der, bedingt durch den Zerfall der Peroxide, Radikale entstehen, die zur Vernetzung des Kunststoffes führen. Die Zeit bzw .die Geschwindigkeit dieses Zerfalls ist durch die Halbwertszeit des Peroxides definiert, welche bei dem erfindungsgemäßen Verfahren etwa 3 Minuten beträgt. Auf diese Weise kann ein besonders hoher Vernetzungsgrad während des kontinuierlich laufenden Verfahrens erreicht werden.

Die Temperatur des Kunststoffs liegt vor dem Eintritt ins Extrusionswerkzeug höchstens 30% über dem Kristallitschmelzbereich des Kunststoffs. Dadurch lässt sich wirksam ein vorzeitiges Vernetzen des Kunststoffs verhindern.

Auch kann es sich durch Durchführung des Verfahrens als vorteilhaft erweisen, wenn die Vernetzungstemperatur des Kunststoffs ca. 30% über dem Kristallitschmelzbereich liegt. Der Kunststoff ist durch Zugabe des Vernetzungsmittel und etwaiger weiterer Zusatzstoffe entsprechend einzustellen.

Als günstig kann es sich dabei erweisen, wenn die Schmelztemperatur des Kunststoffs bei ca. 125 bis 140° C, vorzugsweise bei ca. 135° C liegt.

Ebenso kann es sich als vorteilhaft erweisen, wenn die Vernetzungstemperatur des Kunststoffs bei ca. 165° bis 185° C, vorzugsweise bei 175° C liegt.

Für das fertiggestellte Rohr und dessen Qualität kann es sich weiterhin als vorteilhaft erweisen, wenn der Grad der Vernetzung des Kunststoffs beim Verlassen des Extrusionswerkzeugs mehr als 60%, vorzugsweise mehr als 70° beträgt.

Um eine möglichst gute Homogenisierung des Kunststoffs während des Aufschmelzens zu erhalten, kann es sich als vorteilhaft erweisen, wenn im Extruder die Temperatur des ungeschmolzenen Kunststoffs, geführt von ca. 120° bis 140° C, vorzugsweise 130°C, bis über die Schmelztemperatur erhöht wird. Der Kunststoff kann z. B. bereits vor dem Zuführen zum Extruder vorgewärmt sein.

Zur Steigerung der Qualität des fertiggestellten Rohres kann es sich weiterhin als vorteilhaft erweisen, wenn das Rohr nach Verlassen des Extrusionswerkzeugs weiter auf eine Temperatur oberhalb der Vernetzungstemperatur gehalten wird. Dadurch kann die Vernetzung weitergeführt und eine vollständige Vernetzung erzielt werden.

Nach dem vollständigen Vernetzen kann das Formstück abgekühlt werden. Durch das Abkühlen lässt sich die Zeit bis zur weiteren Verarbeitung des Rohres reduzieren.

Zudem kann es sich als günstig erweisen, wenn der Schmelzdruck vor dem Eintritt in das Extrusionswerkzeug ca. 700 bis 1500 bar, vorzugsweise 1200 bar nicht übersteigt. Auch dadurch lassen sich die Belastungen der Vorrichtung zum Durchführen des Verfahrens gegenüber herkömmlichen Verfahren reduzieren.

Weiterhin wird erfindungsgemäß eine Vorrichtung, gemäß Anspruch 12, zum Durchführen des erfindungsgemäßen Verfahrens beansprucht.

Mit der Vorrichtung lässt sich das erfindungsgemäße Verfahren durchführen und die erfindungsgemäßen Vorteile erzielen.

Von Vorteil kann es zudem sein, wenn eine Kühleinrichtung im Inneren des Extruders vorgesehen ist. Dadurch lässt sich eine Kombination aus Erwärmen an der Außenseite des Extruders oder Kühlen an der Innenseite des Extruders und damit ein gezieltes Temperaturverhalten des Kunststoffs erzeugen.

Das Extrusionswerkzeug ist beheizbar. Dadurch lässt sich die Vernetzung im Extrusionswerkzeug beschleunigen.

Das Extrusionswerkzeug ist sowohl von innen wie auch von außen beheizbar. Dann kann der Vernetzungsvorgang beschleunigt werden.

Auch kann es sich als vorteilhaft erweisen, wenn der Extruder zwei Schnecken aufweist und als Doppelschneckenextruder ausgebildet ist. Damit die Förderrate gesteigert und eine besonders materialschonende Verarbeitung des Kunststoffs erfolgen.

In einer Weiterbildung der Erfindung kann die Schnecke des Extruders zumindest zwei Abschnitte unterschiedlicher Steigung aufweisen. Auch dadurch lässt sich die Temperatur des Kunststoffs während des Förderns durch den Extruder gezielt beeinflussen.
In einer weiteren Ausführungsform der Erfindung kann die Schnecke des Extruders in wenigstens einem Abschnitt Mischelemente aufweisen, durch welche eine bessere Durchmischung und Homogenisierung der Kunststoffschmelze erreichbar ist.
Von Vorteil kann es dabei sein, wenn die Steigung des in Förderrichtung naher am Ablauf liegenden Abschnitts größer als die des näher am Einlauf liegenden Abschnitts ist. Auf diese Weise lässt sich das Temperaturverhalten positiv beeinflussen.

Auch kann es sich als vorteilhaft erweisen, wenn die wandstärke der Stege eines Abschnitts der Schnecke in Förderrichtung zunimmt. Dies kann sich positiv auf das Verhalten des Kunststoffs während des Förderns auswirken.

Zudem kann es sich als vorteilhaft erweisen, wenn der Durchmesser der Schnecke des Extruders in Förderrichtung abnimmt.

Um das Kühlen der Schnecke des Extruders zu vereinfachen, kann die Schnecke hohl ausgebildet sein.

Nachfolgend wird die Erfindung anhand eines Ausführungsbeispiels näher erläutert:

Es zeigen:
Fig. 1 eine schematische Darstellung einer erfindungsgemäßen Vorrichtung zur Durchführung des erfindungsgemäßen Verfahrens;
Fig. 2 eine Schnecke eines Extruders der erfindungsgemäßen Vorrichtung.

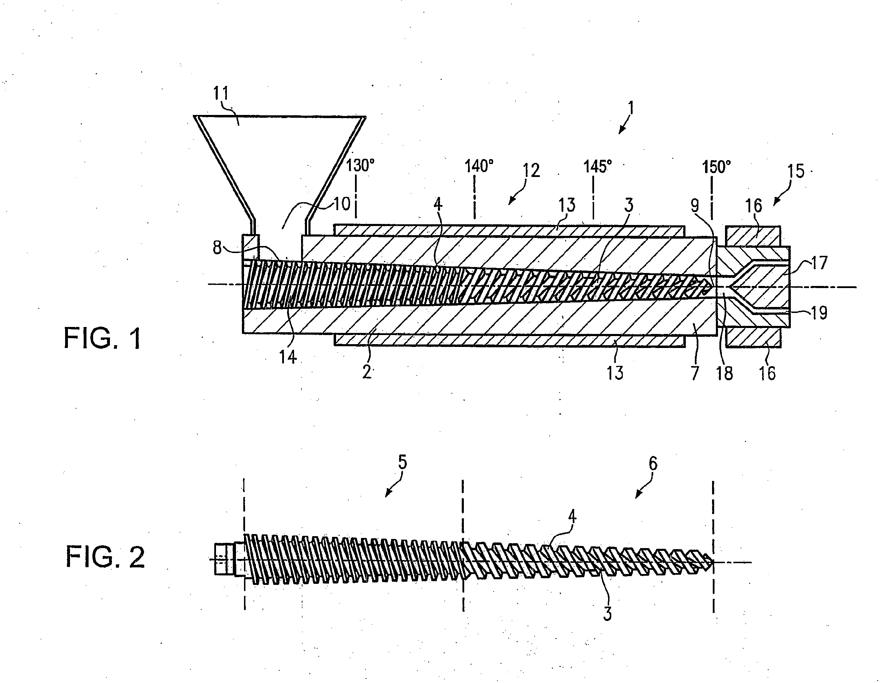

Figur 1 zeigt eine Vorrichtung 1, die einen Extruder 2 in einer Schnecke 3 aufweist, auf der eine Spirale 4 angebracht ist.

Die Schnecke 3 des Extruders 2 ist in Figur 2 vergrößert dargestellt. Die Schnecke 3 ist in Förderrichtung konisch zulaufend ausgebildet und verfügt über einen ersten Abschnitt 5 und einen zweiten Abschnitt 6, wobei sich die Steigung der Spirale 4 in den Abschnitten 5 und 6 unterscheidet. Im ersten Abschnitt 5 ist die Steigung der Spirale kleiner als im zweiten Abschnitt 6. Zudem ist die Breite der Stege in Förderrichtung im ersten Abschnitt 5 kleiner als im zweiten Abschnitt 6.

Die Schnecke 3 ist in einem Zylinder 7 des Extruders 2 aufgenommen, wobei der Zylinder 7 über einen Zulauf 8 und einen Ablauf 9 verfügt.

Am Zulauf 8 befindet sich oberhalb eine Öffnung 10 des Zylinders 7 eine Zuführeinrichtung in Form eines Trichters 11.

Weiterhin verfügt die Vorrichtung über eine Temperiereinrichtung 12 mit einer Heizeinrichtung 13 außen am Zylinder 7. Die Heizeinrichtung 13 kann hierbei mehrere Heizelemente sogenannte Heizbänder aufweisen.
Zusätzlich ist die Schnecke 3 hohl ausgebildet und ermöglicht das Durchleiten eines Kühlmediums einer Kühleinrichtung 14.

Am Ablauf 9 des Extruders 2 befindet sich ein Extrusionswerkzeug 15, das sowohl im Inneren, wie auch an der Außenseite über Heizeinrichtungen 16 und 17 verfügt. An den Ablauf 9 des Extruders 2 schließt sich ein Zulauf 18 des Extrusionswerkzeuges 15 an. Durch den Auslauf 19 des Extrusionswerkzeuges kann ein fertiggestelltes Rohr aus der Vorrichtung austreten.

Nachfolgend wird die Wirkungs- und Funktionsweise der Erfindung näher erläutert.

Zum Durchführen des Verfahrens wird in den Trichter 11 eine Mischung aus einem Polyolefin, wie z. B. Polyethylen HD-PE/UHMPE oder ein anderer vernetzbarer Kunststoff zusammen mit einem Vernetzungsmittel, z. B. organisches Peroxid mit einer Vernetzungstemperatur von 180° bis 210° C bei einer Halbwertszeit von 1 min. und einem Stabilisator oder weiteren Bestandteilen vermischt und eingefüllt. Das Polyethylen kann als Grieß oder Granulat vorliegen, der Stabilisator als Pulver oder Granulat und das Peroxid als Flüssigkeit, Granulat oder Pulver. Die fertiggestellten Rohre sind sogenannte PE- Xa- Rohre, wobei PE-Xa auf einen vernetzten Kunststoff hinweist. Über die Öffnung 10 und den Zulauf 8 gelangt die Mischung in den Extruder 2. Durch einen nicht dargestellten Antrieb wird die Schnecke 3 des Extruders 2 kontinuierlich angetrieben, wodurch eine Förderbewegung des Kunststoff vom Zulauf 8 zum Ablauf 9 erfolgt. Aufgrund der Gestaltung der Schnecke 3 folgt auf dem Weg vom Zulauf 8 zum Ablauf 9 ein Vermischen des Kunststoffs und ein Erwärmen, wobei die Gestaltung der Schnecke 3 das Erwärmen unterstützt. Der Vorgang des Erwärmens wird zusätzlich durch die Heizeinrichtung 13 und die Kühleinrichtung 14 gesteuert, wobei durch die Heizeinrichtung 13 oder die Kühleinrichtung 14 gezielt Wärme dem Kunststoff zugeführt bzw. abgeführt werden kann. Es kann auf diese Weise ein besonders gleichmäßiges Erwärmen und Homogenisieren des Kunststoffs sowie der Stabilisatoren und des Vernetzungsmittels erfolgen. Bis zum Ablauf 9 wird dabei der Kunststoff über seine Schmelztemperatur hinaus, jedoch unterhalb der Vernetzungstemperatur erwärmt. Im vorliegenden Beispiel beträgt die Schmelztemperatur ca. 160° C. Je nach Eigenschaften des Kunststoffs kann dieser Wert unterschiedlich ausfallen. Die Vernetzungstemperatur im vorliegenden Beispiel beträgt 175° C. Der nun mehr aufgeschmolzene Kunststoff, jedoch noch nicht vernetzte Kunststoff, gelangt über den Zulauf 18 in das Extrusionswerkzeug 15, wo ihm die endgültige Form gegeben wird. Durch Heizeinrichtungen erfolgt nunmehr ein weiteres Aufheizen des Kunststoffs von ca. 160°C auf einen Wert oberhalb der Vernetzungstemperatur, wobei im bevorzugten Beispiel die Temperatur des Kunststoffs auf 230° C erhöht wird. Dadurch findet ein starkes Vernetzen des Kunststoffs im Extrusionswerkzeug statt. Der Vernetzungsgrad als Maß für die Vernetzung beträgt dabei über 70% nach DIN 16892.
Da im Extrusionswerkzeug nur ein geringfügiges weiteres Erwärmen des bereits geschmolzenen Kunststoffes erfolgt, wirkt sich dies positiv auf die Maßhaltigkeit der fertiggestellten Rohre aus, die am Auslauf 19 des Extrusionswerkzeuges 15 austreten. Es ist somit möglich, bei hoher Maßhaltigkeit und großem Vernetzungsgrad Rohre herzustellen. Anstelle von Polyethylen bzw. Polyolefinen sind auch andere vernetzbare Kunststoffe denkbar.

In nachfolgenden Bearbeitungsschritten kann das am Auslauf 19 des Extrusionswerkzeuges 15 austretende Rohr noch weiter erwärmt werden über die Vernetzungstemperatur, um ein vollständiges Vernetzen zu erzielen. Zusätzlich kann eine Kühleinrichtung vorgesehen sein, durch die das Rohr nach dem vollständigen Vernetzen abgekühlt werden kann, um es möglichst schnell weiteren Bearbeitungsschritten zuführen zu können.

Durch das gezielte, schonende Erwärmen des Kunststoffs im Extruder lässt sich eine gute Homogenisierung des Kunststoffs erzielen. Zudem können die Belastungen im Extruder reduziert werden, da ein ungewolltes Vernetzen vermeidbar ist. In Figur 1 sind verschiedene Punkte mit zugehöriger Temperaturangabe vermerkt. Man erkennt daran, wie kontinuierlich ein Erwärmen des Kunststoffs während des Förderns erfolgt. So steigt die Temperatur an von ca. 130° auf 140°, 145° und schließlich auf 150° C und leicht darüber. Zudem hat sich für die Durchführung des Verfahrens auch die Gestaltung der Schnecke 3 als besonders vorteilhaft herausgestellt. Die spezielle Steigung und die Gestaltung der Schnecke unterstützt das gleichmäßige Mischen und Aufheizen des Kunststoffs.

Die nach dem erfindungsgemäßen Verfahren hergestellten Rohre eignen sich für sanitäre Kalt- und Warmwasserleitungen, Fußboden- und Wandheizung, Heizkörperanschluss, Fernwärmeleitungen, Erdverlegte Gas-, Wasser- und Abwasserleitungen, Druckluftleitunge, Industrierohrnetze für flüssige und gasförmige Medien, Erdkollektoren und Sonderrohranwendungen.

## Patentansprüche

1. Verfahren zum Extrudieren von peroxidisch vernetzten Rohren aus Kunststoff, bei denen der vernetzbare Kunststoff in einem Extruder (2) erwärmt und kontinuierlich einem Extrusionswerkzeug (15) zum Erzeugen des Rohrs zugeführt wird und eine zumindest teilweise Vernetzung des Kunststoffs im Extrusionswerkzeug durch Erwärmung des Kunststoffs über eine Vernetzungstemperatur hinaus erfolgt, wobei durch eine Temperiereinrichtung (12) die Temperatur des ungeschmolzenen Kunststoffs im Extruder geführt bis auf einen Wert oberhalb dem Kristallitschmelzbereich des Kunststoffs jedoch unterhalb der Vernetzungstemperatur erwärmt wird, wobei durch die Temperiereinrichtung (12) dem Extruder Wärme von außen zugeführt wird **dadurch gekennzeichnet, dass** die Temperatur des Kunststoffs vor Eintritt ins Extrusionswerkzeug höchstens 30% über dem Kristallitschmelzbereich des Kunststoffs liegt und erst nach Eintritt in das Extrusionswerkzeug die Temperatur über die Vernetzungstemperatur angehoben wird, wobei die Temperatur des Kunststoffs im Extrusionswerkzeug durch Wärmezufuhr von außen zum Extrusionswerkzeug erreicht wird und die Temperatur des Kunststoffs im Extrusionswerkzeugs zumindest 15% über der Vernetzungstemperatur liegt und höchstens 60% über der Vernetzungstemperatur liegt, wobei das Rohr nach Verlassen des Extrusionswerkzeugs weiter auf einer Temperatur oberhalb der Vernetzungstemperatur gehalten wird.

2. Verfahren nach Anspruch 1,**dadurch gekennzeichnet, dass** durch die Temperiereinrichtung Wärme von innen aus dem Extruder abgeführt wird.

3. Verfahren nach einem der vorangegangenen Ansprüche, **dadurch gekennzeichnet, dass** ein Doppelschneckenextruder verwendet wird.

4. Verfahren nach einem der vorangegangenen Ansprüche, **dadurch gekennzeichnet, dass** die Temperatur des Kunststoffs im Extrusionswerkzeug durch Wärmezufuhr im Inneren des Extrusionswerkzeugs erreicht wird.

5. Verfahren nach einem der vorangegangenen Ansprüche, **dadurch gekennzeichnet, dass** die Vernetzungstemperatur des Kunststoffs um ca. 30% über dem Kristallitschmelzbereich liegt.

6. Verfahren nach einem der vorangegangenen Ansprüche, **dadurch gekennzeichnet, dass** der Kristallitschmelzbereich des Kunststoffs bei ca. 125-140°, vorzugsweise bei 135° C liegt.

7. Verfahren nach einem der vorangegangenen Ansprüche, **dadurch gekennzeichnet, dass** die Vernetzungstemperatur des Kunststoffs bei ca. 165-185° C, vorzugsweise bei 175° C liegt.

8. Verfahren nach einem der vorangegangenen Ansprüche, **dadurch gekennzeichnet, dass** der Grad der Vernetzung des Kunststoffs beim Verlassen des Extrusionswerkzeugs mehr als 60, vorzugsweise mehr als 70% beträgt.

9. Verfahren nach einem der vorangegangenen Ansprüche, **dadurch gekennzeichnet, dass** im Extruder die Temperatur des ungeschmolzenen Kunststoffs geführt von ca. 120-140° C, vorzugsweise 130° C, über die Schmelztemperatur hinaus erhöht wird.

10. Verfahren nach einem der vorangegangenen Ansprüche, **dadurch gekennzeichnet, dass** das Rohr nach dem Vernetzen abgekühlt wird.

11. Verfahren nach einem der vorangegangenen Ansprüche, **dadurch gekennzeichnet, dass** der Schmelzdruck vor dem Eintritt ins Extrusionswerkzeug ca. 700-1500 bar, vorzugsweise 1200 bar nicht übersteigt.

12. Vorrichtung zum Durchführen des Verfahrens nach einem der Ansprüche 1 bis 11, mit einem Extruder (2) mit einem Zulauf (8) und einem Ablauf (9), und mit einer Zuführeinrichtung (11) zum Zuführen des Kunststoffs zum Extruder am Zulauf des Extruders (2) und mit einem Extrusionswerkzeug (15) am Ablauf des Extruders, wobei eine Temperiereinrichtung (12) vorgesehen ist, mit der die Temperatur des ungeschmolzenen Kunststoffs im Extruder geführt auf eine Temperatur oberhalb dem Kristaliitschmelzbereich des Kunststoffs erhöht werden kann und die Temperiereinrichtung zumindest eine Heizeinrichtung (13) außerhalb der Schnecke (3) des Extruders (2) aufweist **dadurch gekennzeichnet, dass** das Extrusionswerkzeug (15) sowohl von innen wie auch von außen beheizbar ist, und dass eine Einrichtung vorgesehen ist, das Formstück nach Verlassen des Extrusionswerkzeugs (15) weiter auf einer Temperatur oberhalb der Vernetzungstemperatur zu halten.

13. Vorrichtung nach Anspruch 12, **dadurch gekennzeichnet, dass** eine Kühleinrichtung im Innern des Extruders vorgesehen ist.

14. Vorrichtung einem der vorangegangenen Ansprüche 12 oder 13, **dadurch gekennzeichnet, dass** der Extruder zwei Schnecken aufweist und als Doppelschneckenextruder ausgebildet ist.

15. Vorrichtung nach einem der Ansprüche 12 bis 14, **dadurch gekennzeichnet, dass** die Schnecken des Extruders zumindest zwei Abschnitte unterschiedlicher Steigung aufweisen.

16. Vorrichtung nach Anspruch 15, **dadurch gekennzeichnet, dass** die Steigung des in Förderrichtung näher am Ablauf liegenden Abschnitts größer als die des näher am Zulauf liegenden Abschnitts ist.

17. Vorrichtung nach einem der Ansprüche 12 bis 16, **dadurch gekennzeichnet, dass** die Schnecken des Extruders in wenigstens einem Abschnitt Mischelemente aufweist.

18. Vorrichtung nach einem der Ansprüche 12 bis 17, **dadurch gekennzeichnet, dass** die Wandstärke der Stege einer Schnecke in Förderrichtung zunimmt.

19. Vorrichtung nach einem der Ansprüche 12 bis 18, **dadurch gekennzeichnet, dass** der Durchmesser der Schnecke in Förderrichtung abnimmt.

20. Vorrichtung nach einem der Ansprüche 12 bis 19 **dadurch gekennzeichnet, dass** die Schnecke hohl ausgebildet ist.

## Claims

1. Process for the extrusion of peroxide-crosslinked plastic tubes, in which the crosslinkable plastic is heated in an extruder (2) and fed continuously to an extrusion die (15) to create the tube and an at least partial crosslinking of the plastic takes place in the extrusion die by heating of the plastic above a crosslinking temperature, wherein the temperature of the unmelted plastic in the extruder is heated by a temperature-control device (12) to a value above the crystalline melting range of the plastic but below the crosslinking temperature, wherein heat is supplied to the extruder from the outside by the temperature-control device (12), **characterized in that** the temperature of the plastic before entering the extrusion die is at most 30% above the crystalline melting range of the plastic and the temperature is only raised above the crosslinking temperature after it enters the extrusion die, wherein the temperature of the plastic in the extrusion die is achieved by supplying heat to the extrusion die from the outside and the temperature of the plastic in the extrusion die is at least 15% above the crosslinking temperature and at most 60% above the crosslinking temperature, wherein the tube continues to be kept at a temperature above the crosslinking temperature after leaving the extrusion die.

2. Process according to Claim 1, **characterized in that** heat is removed from the extruder from the inside by the temperature-control device.

3. Process according to one of the preceding claims, **characterized in that** a twin-screw extruder is used.

4. Process according to one of the preceding claims, **characterized in that** the temperature of the plastic in the extrusion die is achieved by supplying heat in the interior of the extrusion die.

5. Process according to one of the preceding claims, **characterized in that** the crosslinking temperature of the plastic is about 30% above the crystalline melting range.

6. Process according to one of the preceding claims, **characterized in that** the crystalline melting range of the plastic is at about 125-140°C, preferably at 135°C.

7. Process according to one of the preceding claims, **characterized in that** the crosslinking temperature of the plastic is at about 165-185°C, preferably at 175°C.

8. Process according to one of the preceding claims, **characterized in that** the degree of the crosslinking of the plastic when it leaves the extrusion die is more than 60%, preferably more than 70%.

9. Process according to one of the preceding claims, **characterized in that** the temperature of the unmelted plastic in the extruder is increased from about 120-140°C, preferably 130°C, to above the melting temperature.

10. Process according to one of the preceding claims, **characterized in that** the tube is cooled after the crosslinking.

11. Process according to one of the preceding claims, **characterized in that** the melt pressure before entering the extrusion die does not exceed about 700-1500 bar, preferably 1200 bar.

12. Apparatus for carrying out the process according to one of Claims 1 to 11, comprising an extruder (2) with an inlet (8) and an outlet (9) and comprising a feeding device (11) for feeding the plastic to the extruder at the inlet of the extruder (2) and comprising an extrusion die (15) at the outlet of the extruder, wherein a temperature-control device (12) is provided, with which the temperature of the unmelted plastic in the extruder can be increased to a temperature above the crystalline melting range of the plastic and the temperature-control device has at least one heating device (13) outside the screw (3) of the extruder (2), **characterized in that** the extrusion die (15) can be heated both from the inside and from the outside, and **in that** a device is provided for continuing to keep the moulded part at a temperature above the crosslinking temperature after it leaves the extrusion die (15).

13. Apparatus according to Claim 12, **characterized in that** a cooling device is provided in the interior of the extruder.

14. Apparatus according to either of the preceding Claims 12 and 13, **characterized in that** the extruder has two screws and is formed as a twin-screw extruder.

15. Apparatus according to one of Claims 12 to 14, **characterized in that** the screws of the extruder have at least two sections of differing pitch.

16. Apparatus according to Claim 15, **characterized in that** the pitch of the section lying closer to the outlet in the feeding direction is greater than that of the section lying closer to the inlet.

17. Apparatus according to one of Claims 12 to 16, **characterized in that** the screws of the extruder have mixing elements in at least one section.

18. Apparatus according to one of Claims 12 to 17, **characterized in that** the wall thickness of the flights of a screw increases in the feeding direction.

19. Apparatus according to one of Claims 12 to 18, **characterized in that** the diameter of the screw decreases in the feeding direction.

20. Apparatus according to one of Claims 12 to 19, **characterized in that** the screw is of a hollow form.

## Revendications

1. Procédé pour extruder des tubes en matière plastique réticulée au moyen de peroxydes, dans lesquels la matière plastique réticulable est chauffée dans une extrudeuse (2) et est fournie en continu à un outil d'extrusion (15) pour la production du tube et une réticulation au moins partielle de la matière plastique se produit dans l'outil d'extrusion par chauffage de la matière plastique au-delà d'une température de réticulation, dans lequel la température de la matière plastique non fondue dans l'extrudeuse est portée de façon contrôlée au moyen d'un dispositif d'équilibrage de la température (12) jusqu'à une valeur supérieure à la zone de fusion cristalline de la matière plastique, mais inférieure à la température de réticulation, dans lequel de la chaleur est fournie de l'extérieur à l'extrudeuse par le dispositif d'équilibrage de la température (12), **caractérisé en ce que** la température de la matière plastique avant l'entrée dans l'outil d'extrusion se situe au maximum à 30 % au-delà de la zone de fusion cristalline de la matière plastique et la température n'est augmentée au-delà de la température de réticulation qu'après l'entrée dans l'outil d'extrusion, dans lequel la température de la matière plastique dans l'outil d'extrusion est atteinte par apport de chaleur de l'extérieur à l'outil d'extrusion et la température de la matière plastique dans l'outil d'extrusion se situe au moins 15 % au-delà de la température de réticulation et au maximum 60 % au-delà de la température de réticulation, dans lequel le tube est encore maintenu à une température supérieure à la température de réticulation après avoir quitté l'outil d'extrusion.

2. Procédé selon la revendication 1, **caractérisé en ce que** de la chaleur est évacuée de l'intérieur hors de l'extrudeuse par le dispositif d'équilibrage de la température.

3. Procédé selon l'une quelconque des revendications précédentes, **caractérisé en ce que** l'on utilise une extrudeuse à double vis.

4. Procédé selon l'une quelconque des revendications précédentes, **caractérisé en ce que** la température de la matière plastique dans l'outil d'extrusion est atteinte par apport de chaleur à l'intérieur de l'outil d'extrusion.

5. Procédé selon l'une quelconque des revendications précédentes, **caractérisé en ce que** la température de réticulation de la matière plastique se situe à environ 30 % au-delà de la zone de fusion cristalline.

6. Procédé selon l'une quelconque des revendications précédentes, **caractérisé en ce que** la zone de fusion cristalline de la matière plastique se situe à environ 125-140°C, de préférence à 135°C.

7. Procédé selon l'une quelconque des revendications précédentes, **caractérisé en ce que** la température de réticulation de la matière plastique se situe à environ 165-185°C, de préférence à 175°C.

8. Procédé selon l'une quelconque des revendications précédentes, **caractérisé en ce que** le degré de réticulation de la matière plastique lorsqu'elle quitte l'outil d'extrusion vaut plus de 60 %, de préférence plus de 70 %.

9. Procédé selon l'une quelconque des revendications précédentes, **caractérisé en ce que** la température de la matière plastique non fondue dans l'extrudeuse est portée de façon contrôlée d'environ 120-140°C, de préférence de 130°C, jusqu'au-delà de la température de fusion.

10. Procédé selon l'une quelconque des revendications précédentes, **caractérisé en ce que** le tube est refroidi après la réticulation.

11. Procédé selon l'une quelconque des revendications précédentes, **caractérisé en ce que** la pression de fusion avant l'entrée dans l'outil d'extrusion ne dépasse pas environ 700-1500 bar, de préférence 1200 bar.

12. Dispositif pour la mise en oeuvre du procédé selon l'une quelconque des revendications 1 à 11, avec une extrudeuse (2) comportant une arrivée (8) et un départ (9), et avec un dispositif d'alimentation (11) pour apporter la matière plastique à l'extrudeuse à l'arrivée de l'extrudeuse (2) et avec un outil d'extrusion (15) au départ de l'extrudeuse, dans lequel il est prévu un dispositif d'équilibrage de la température (12), avec lequel la température de la matière plastique non fondue dans l'extrudeuse peut être portée de façon contrôlée à une température supérieure à la zone de fusion cristalline de la matière plastique et le dispositif d'équilibrage de la température présente au moins un dispositif de chauffage (13) à l'extérieur de la vis (3) de l'extrudeuse (2), **caractérisé en ce que** l'outil d'extrusion (15) peut être chauffé aussi bien de l'intérieur que de l'extérieur, et **en ce qu'**il est prévu un dispositif pour maintenir encore la pièce moulée à une température supérieure à la température de réticulation après qu'elle ait quitté l'outil d'extrusion (15).

13. Dispositif selon la revendication 12, **caractérisé en ce qu'**il est prévu un dispositif de refroidissement à l'intérieur de l'extrudeuse.

14. Dispositif selon l'une des revendications précédentes 12 ou 13, **caractérisé en ce que** l'extrudeuse présente deux vis et est réalisée sous la forme d'une extrudeuse à double vis.

15. Dispositif selon l'une quelconque des revendications 12 à 14, **caractérisé en ce que** les vis de l'extrudeuse présentent au moins deux parties de pas différent.

16. Dispositif selon la revendication 15, **caractérisé en ce que** le pas de la partie située le plus près du départ dans la direction de transport est plus grand que celui de la partie située plus près de l'arrivée.

17. Dispositif selon l'une quelconque des revendications 12 à 16, **caractérisé en ce que** les vis de l'extrudeuse présentent un élément de mélange dans au moins une partie.

18. Dispositif selon l'une quelconque des revendications 12 à 17, **caractérisé en ce que** l'épaisseur de paroi des ailettes d'une vis augmente dans la direction de transport.

19. Dispositif selon l'une quelconque des revendications 12 à 18, **caractérisé en ce que** le diamètre de la vis diminue dans la direction de transport.

20. Dispositif selon l'une quelconque des revendications 12 à 19, **caractérisé en ce que** la vis est creuse.
